(19) **Europäisches Patentamt / European Patent Office / Office européen des brevets**

(11) **EP 2 090 047 B1**

(12) **EUROPEAN PATENT SPECIFICATION**

(45) Date of publication and mention
of the grant of the patent:
**14.11.2012 Bulletin 2012/46**

(51) Int Cl.:
**H04L 25/02** (2006.01)    **H04L 27/26** (2006.01)

(21) Application number: **07827072.5**

(22) Date of filing: **28.11.2007**

(86) International application number:
**PCT/IB2007/054823**

(87) International publication number:
**WO 2008/068669 (12.06.2008 Gazette 2008/24)**

(54) **IMPROVING PERFORMANCE IN A TIME-FREQUENCY INTERLEAVED ORTHOGONAL FREQUENCY DIVISION MULTIPLEXING SYSTEM**

VERBESSERUNG DER LEISTUNGSFÄHIGKEIT IN EINEM ZEITFREQUENZVERSCHACHTELTEN ORTHOGONALFREQUENZMULTIPLEXSYSTEM

AMÉLIORATION DE LA PERFORMANCE DANS UN SYSTÈME DE MULTIPLEXAGE PAR RÉPARTITION ORTHOGONALE DE LA FRÉQUENCE ENTRELACÉE DE FRÉQUENCE TEMPORELLE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **01.12.2006 US 868113 P**

(43) Date of publication of application:
**19.08.2009 Bulletin 2009/34**

(73) Proprietor: **Koninklijke Philips Electronics N.V.
5621 BA Eindhoven (NL)**

(72) Inventors:
• **GADDAM, Vasanth R.
Briarcliff Manor, New York 10510-8001 (US)**
• **PU, Tianyan
Briarcliff Manor, New York 10510-8001 (US)**
• **ZHANG, Yifeng
Briarcliff Manor, New York 10510-8001 (US)**

(74) Representative: **Van Velzen, Maaike Mathilde
Philips
Intellectual Property & Standards
P.O. Box 220
5600 AE Eindhoven (NL)**

(56) References cited:
**WO-A-2006/010159    US-A1- 2006 062 322
US-A1- 2006 114 981**

**Description**

This disclosure generally relates to wireless communications and packet based Orthogonal Frequency Division Multiplexing (OFDM) systems, and more specifically to mitigating interference and improving performance in a time-frequency interleaved orthogonal frequency division multiplexing (TFI-OFDM) system.

In a typical TFI-OFDM system, the frequency spectrum is divided into a number of sub-bands each having a predetermined width. For example, a WiMedia TFI-OFDM system uses three sub-bands each having a bandwidth of 528 megahertz (MHz) for a total of about 1.5 gigahertz (GHz). The WiMedia system can provide data rates from about 53.3 mega bits per second (Mb/s) to about 480 Mb/s. Spatial capacity for the TFI-OFDM system is provided through time-frequency codes (TFC) that each piconet uses to impart a unique frequency band-hopping sequence. Although the TFCs enable multiple piconets to communicate at the same time, there are instances where interference can arise when the frequency band-hopping sequence causes the piconets to operate in the same frequency band. In-band Interference can also arise, especially in WiMedia applications, where multiple piconets operate in close range with respect to each; and also in the form of narrowband interference when other devices are operating simultaneous in this band. These types of interference can severely degrade the performance in different channel conditions.

The US 2006/0114981 A1 discloses a wireless area network (WLAN) for simultaneously estimating unknown multiple-path channel and noise characteristics and using the channel and noise estimates to improve a system performance in the presence of narrow band interferers. To achieve this, a physical layer convergence procedure (PLCP) preamble field is comprised of ten repetitions of short training sequence and two repetitions of a long training sequence. The ten repetitions of the short sequence serve to provide synchronization and timing at the receiver. The two long training sequences serve to provide both the transmitter and the receiver with a-priori knowledge of the values of their data bits, so that this knowledge can be used to derive a channel estimate. The channel estimate is based on a simplified interference model where channel and noise variance estimates are averaged over the long training sequences included in each data packet.

Furthermore, the US 2006/0062322 A1 disclosed noise variance estimation in wireless communications, which includes receiving a signal including an OFDM symbol having in-band tones including in-band pilot tones, and band-edge tones including band-edge pilot tones and guard tones, wherein an effective noise variance is estimated for the in-band tones using the in-band pilot tones and channel estimates for the in-band pilot tones, and an effective noise variance is estimated for the band-edge tones using the band-edge pilot tones, channel estimates for the band-edge pilot tones, and the guard tones.

Additionally, the WO 2006/010159 A1 discloses iterative channel interference estimation with dedicated pilot tones for OFDMA, wherein an estimate of the channel is used to determine a new updated value for the interference level, which in turn, is used to update the value of the estimate of the channel iteratively. The iterations continue until the iteratively updated values of the interference level and channel satisfy predefined limits.

Therefore, there is a need for an approach that can mitigate the effects of interference that is introduced in a TFI-OFDM system.

In one embodiment, there is a TFI-OFDM receiver system. In this embodiment, the system comprises a receiver configured to receive data packets transmitted in certain frequency bands corresponding to a TFC number. Each received data packet comprises OFDM symbols segmented into a preamble section, header section and payload section. A Fast Fourier Transform processor is configured to transform the OFDM symbols from a time domain into a frequency domain. A channel estimator is configured to estimate a channel impulse response for the data packets. The channel estimator estimates the channel impulse response from frequency domain OFDM symbols in the preamble section. A noise variance estimator is configured to derive a noise variance estimate from the frequency domain OFDM symbols in the preamble section.

In another embodiment, there is a TFI-OFDM receiver system. In this embodiment, the system comprises a receiver configured to receive data packets transmitted in a certain frequency bands corresponding to a TFC number. Each received data packet comprises OFDM symbols segmented into a preamble section, header section and payload section. A Fast Fourier Transform processor is configured to transform the OFDM symbols from a time domain into a frequency domain. A channel estimator is configured to estimate a channel impulse response for the data packets. The channel estimator estimates the channel impulse response from frequency domain OFDM symbols in the preamble section. A noise variance estimator is configured to derive a noise variance estimate from the frequency domain OFDM symbols in the preamble section. An updater configured to update the channel impulse response estimated by the channel estimator and the noise variance estimate derived by the noise variance estimator.

In a third embodiment, there is a method for compensating for interference that arises from ultra-wideband devices operating in a communications link. In this embodiment, the method comprises receiving data packets in certain frequency bands corresponding to a TFC number. Each received data packet comprises OFDM symbols segmented into a preamble section, header section and payload section. The method further comprises transforming the OFDM symbols from a time domain into a frequency domain. The method further comprises estimating a channel impulse response from frequency domain OFDM symbols in the preamble section. The method further comprises deriving a noise variance estimate from the frequency domain OFDM symbols in the preamble section.

In yet another embodiment, there is a method for improving performance of ultra-wideband devices operating in a communications link. In this embodiment, the method comprises receiving data packets in certain frequency bands corresponding to a TFC number. Each received data packet comprises OFDM symbols segmented into a preamble section, header section and payload section. The method further comprises transforming the OFDM symbols from a time domain into a frequency domain. The method further comprises estimating a channel impulse response from frequency domain OFDM symbols in the preamble section. The method further comprises deriving a noise variance estimate from the frequency domain OFDM symbols in the preamble section. The method further comprises updating the estimated channel impulse response and the derived noise variance estimate.

FIG. 1 shows an example of a physical layer convergence protocol (PLCP) frame format for a packet based OFDM system;

FIG. 2 shows a table listing an example of hopping patterns for different TFCs that can be used with a TFI-OFDM system;

Fig 3 shows a block diagram of a TFI-OFDM receiver according to a first embodiment of this disclosure;

Fig 4 shows a flow chart describing the operation of the TFI-OFDM receiver depicted in FIG. 3;

Fig 5 shows a block diagram of a TFI-OFDM receiver according to a second embodiment of this disclosure; and

Fig 6 shows a flow chart describing the operation of the TFI-OFDM receiver depicted in FIG. 5.

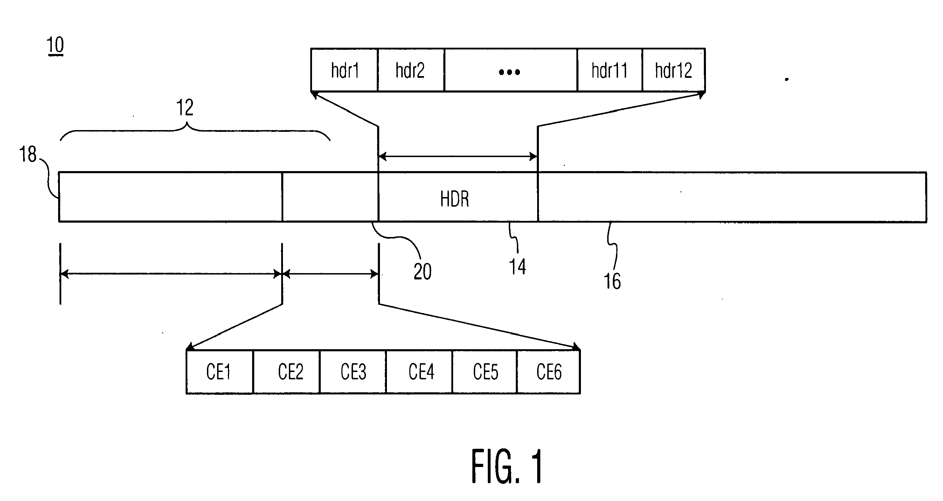

Packet-based transmissions systems such as TFI-OFDM systems transmit packets of data in short bursts. Each packet of data sent in a transmission includes fields that provide information that a receiver utilizes to facilitate the transmission and reception of the packet. FIG. 1 shows an example of a PLCP frame format 10 for a packet of data sent in a TFI-OFDM system. The PLCP frame 10 includes a preamble section 12, a header section 14 and a payload section 16. The preamble section 12 includes a time domain (TD) training sequence 18 and frequency domain (FD) training sequence 20. The TD preamble 18 has a duration that can be either 24 or 12 OFDM symbols. The duration for the TD preamble 18 will depend on the mode of transmission (i.e., standard or streaming). A receiver in a TFI-OFDM system uses the TD preamble 18 for packet and frame synchronization. The FD preamble 20, which follows the TD preamble 18, has a duration of six OFDM symbols. A receiver in a TFI-OFDM system uses the FD preamble 20 for channel estimation (CE). The six OFDM symbols are referred to as CE symbols (i.e., CE1, CE2, CE3, CE4, CE5, and CE6). The header section 14, which follows the FD preamble 20, includes 12 symbols referred to as header symbols (i.e., hdr 1, hdr 2, hdr 3 ... hdr 12). Generally, the header symbols are transmitted at the base rate of 53.3 Mb/s and provide information that is specific to decoding the payload section 16. For example, the header symbols can provide information such as the length of the payload, the amount of bytes transmitted in the payload, the modulation scheme of the transmission and coding rate that was used. The payload section 16, which follows the header section 14, can have a duration that includes a variable number of payload symbols that are transmitted at a specified rate.

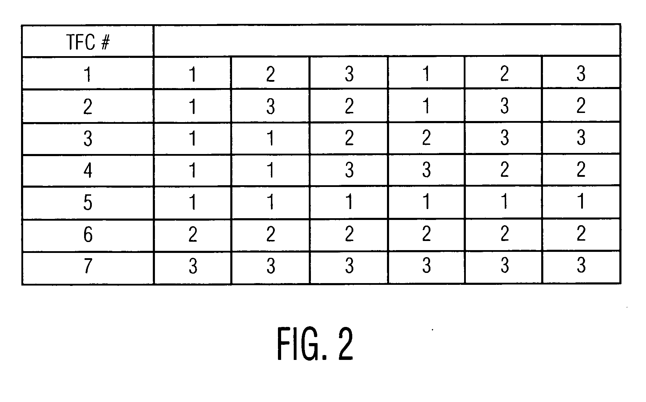

FIG. 2 shows a table listing an example of hopping patterns for different TFCs that can be used with a TFI-OFDM system. For example, in FIG. 2, TFC number one has a hopping pattern that includes 1, 2, 3, 1, 2, 3. This hopping pattern in TFC one indicates that a first symbol is transmitted in band 1, a second symbol is transmitted in band 2, a third symbol is transmitted in band 3 and that this pattern will repeat itself for every three symbols. TFC number two, which has a hopping pattern of 1, 3, 2, 1, 3, 2 means that a first symbol is transmitted in band 1, a second symbol is transmitted in band 3, a third symbol is transmitted in band 2 and that this pattern will repeat itself for every three symbols. These hopping patterns allow one piconet to operate in one communication link, while a second piconet can establish another link by using a different TFC number. Note that hopping patterns are disabled in TFC numbers 5-7 (i.e., the symbols are all transmitted in the same band for a TFC number).

In a TFI-OFDM system, the TFC number used in the hopping pattern and the symbol number in the PLCP frame 10 determines the carrier frequency of a particular symbol in the frame. For example, considering the case of TFC number 1 (i.e., a hopping pattern of 1, 2, 3, 1, 2, 3) and the FD preamble field, the symbols CE1 and CE4 in the FD preamble are transmitted in band 1, symbols CE2 and CE5 are transmitted in band 2 and symbols CE3 and CE6 are transmitted in band 3. For the case of TFC number 3 (i.e., a hopping pattern of 1, 1, 2, 2, 3, 3), the symbols CE1 and CE2 are transmitted in band 1, symbols CE3 and CE4 are transmitted in band 2 and symbols CE5 and CE6 are transmitted in band 3. For TFC numbers 1 to 4, the channel estimation sequence which is determined from the FD preamble symbols (i.e., CE1, CE2, CE3, CE4, CE5, and CE6) is transmitted twice in each of the three bands. For fixed frequency interleaved (FFI) modes (i.e. TFC numbers 5 to 7), where band hopping is disabled, all the six channel estimation symbols are transmitted in the same band. The reliability of the channel estimation for a TFI-OFDM system improves with an increase in the number of the symbols used/transmitted for this purpose. A TFI-OFDM system that can more reliably estimate the channel will have a better understanding of the effects of the channel on the received symbols and therefore be able to more accurately process the symbols in the header section 14 and the payload section 16.

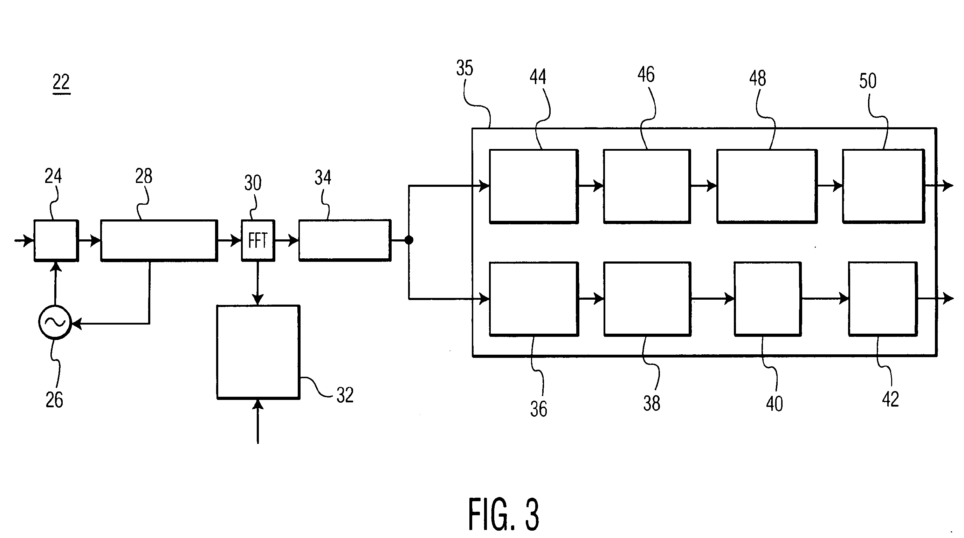

FIG. 3 shows the block diagram of a TFI-OFDM receiver 22 that is able to estimate noise variance using the FD preamble symbols. In FIG. 3, a mixer 24 receives a data packet embodied in a radio frequency (RF) signal having a certain frequency and down-converts the signal using another signal at a different frequency generated from an oscillator 26. The mixer 24 is one component of the RF front-end that performs all RF processing, however, for ease of illustration, FIG. 3 does not show the other components of the RF front-end. For this disclosure, it is assumed that the other RF front-end processing is encapsulated in mixer 24. A synchronization unit 28 receives a mixed-down signal generated from the mixer 24. The synchronization unit 28 adjusts the timing and the frequency of this signal so that it is synchronized with the transmitted signal. In addition to the timing and frequency adjustments, the synchronization unit 28 adjusts Automatic Gain Control (AGC) settings and detects the beginning of the frame. The synchronization unit 28 performs these functions during the TD preamble 18. Once synchronization has occurred, the rest of the OFDM symbols starting from the symbols in the FD preamble 20 will be synchronized. Additional operations that the synchronization unit 28 can perform include well known OFDM receiver operations that pertain to removing zero-padded sequencing and guard intervals.

A Fast Fourier Transform (FFT) processor 30 transforms the signal from the synchronization unit 28 which is in the time domain into the frequency domain. Transforming the signal from the time domain to the frequency domain makes it easier to estimate the channel impulse response from the OFDM symbols that are encoded in the data packet. A channel and noise variance estimation unit 32 uses the band numbers provided in the various TFCs of the frequency hopping pattern and the OFDM symbols in the FD preamble 20 to estimate the channel and the noise variance associated with the channel. Below is a more detailed discussion on estimating the channel impulse response and the noise variance. Note that although FIG. 3 shows that the channel and noise variance estimation unit 32 performs both functions, one skilled in the art will recognize that these functions can be performed in separate processing components.

Once the channel and noise variance estimation unit 32 has estimated the channel and noise variation, an equalization unit 34 equalizes or compensates the OFDM symbols in the header section 14 and the payload section 16 for the effects of the channel. Below is a more detailed discussion of equalizing or compensating the OFDM symbols in the header section 14 and the payload section 16 for the effects of the channel and the noise variance. In addition, the equalization unit 34 equalizes or compensates the OFDM symbols in the header section 14 and the payload section 16 for the effects of common phase error (CPE) that may arise because of carrier frequency offset.

After the equalization unit 34 has equalized or compensated for the OFDM symbols in the header section 14 and the payload section 16 for the effects of the channel, a decoder 35 then decodes the symbols. The decoder 35 includes a branch for processing OFDM symbols of the header section 14 and another branch for processing OFDM symbols of the payload section 16. The branch for decoding the OFDM header symbols includes a despreader and demapper 36. The despreader and demapper 36 despread the symbols and then generate soft bit-metrics from these symbols. A bit de-interleaver 38 then de-interleaves the soft bit-metrics. A Viterbi decoder 40 receives the soft bit-metrics from the bit de-interleaver 38 and decodes the data bits. A RS decoder 42 receives the decoded bits from the Viterbi decoder 40 and outputs the header bits.

The branch for decoding the OFDM payload symbols is similar to the branch for processing the OFDM header symbols in that it includes a despreader and demapper 44 and a bit de-interleaver 46. However, the branch for processing the OFDM payload symbols differs in that there is a de-puncturer and Viterbi decoder 48 that inserts zeros in predetermined locations (defined by the puncturer in the transmitter) and then decodes the data bits. A descrambler 50 receives the decoded bits from the de-puncturer and Viterbi decoder 48 and de-scrambles the bits to get back the information bits.

The decoder shown in FIG. 3 is illustrative of one embodiment that can perform decoding operations on the OFDM symbols of the header section 14 and the payload section 16. One of ordinary skill in the art will recognize that other configurations are possible and that the implementation shown in FIG. 3 is not limiting with respect to these configurations. For example, those skilled in the art will recognize that the decoder 35 may have only one branch that performs both processing of the OFDM header symbols and the OFDM payload symbols.

As mentioned above, the channel and noise variance estimation unit 32 uses the band number information associated with the various TFCs of the frequency hopping pattern and the OFDM symbols in the FD preamble 20 to estimate the channel impulse response. The OFDM symbols received by the channel and noise variance estimation unit 32 from the FFT processor 30 are represented as:

$$R_n(k) = H_m(k)S_n(k) + N(k) \qquad\qquad (1)$$

wherein $k \in [0,127]$ is the sub-carrier index, $n$ is the OFDM symbol number, and $m \in \{1,2,3\}$ is the sub-band index, which is a function of the TFC number shown in FIG. 2 and symbol number $n$. $H_m(k)$ represents the channel frequency response for sub-carrier $k$ on band $m$; $S_n(k)$ and $R_n(k)$ represent the transmitted and received symbols respectively in the frequency domain; and $N(k)$ represents the additive white noise component on sub-carrier $k$.

For the OFDM symbols in the FD preamble section 20 (i.e., CE symbols), the transmitted symbols $S_n(k) = A(k)$, where $A(k)$ is a known training sequence. An estimate of the channel impulse response is derived by dividing the received symbol by the training sequence and averaging across the number of symbols in that band. In particular, the estimate of the channel impulse response $\hat{H}_{CE.m}(k)$ on sub-carrier $k$ in sub-band $m$ derived from CE symbols is derived as follows:

$$\hat{H}_{CE.m}(k) = \frac{1}{P}\sum_{p=1}^{P}\frac{R_{n(m,p)}(k)}{S_{n(m,p)}(k)} \qquad (2)$$

wherein:

$$P = \begin{array}{ll} 2 & TFC = \{1,2,3,4\} \\ 6 & TFC = \{5,6,7\} \end{array} \qquad (3)$$

and $n(m,p)$ is given as

$$n(m,p) = \begin{array}{ll} m + 3(p-1) & TFC = \{1,2\} \\ 2m + p - 2 & TFC = \{3,4\} \\ p & TFC = \{5,6,7\} \end{array} \qquad (4)$$

Substituting for $R_n(k)$ and $S_n(k)$ in the Equation 2, results in:

$$\hat{H}_{CE.m}(k) = \frac{1}{P}\sum_{p=1}^{P}(H_m(k) + \frac{N_{n(m,p)}(k)}{A(k)}) = H_m(k) + \frac{1}{P \times A(k)}\sum_{p=1}^{P}N_{n(m,p)}(k) \qquad (5)$$

Those skilled in the art will recognize that the quality of the channel estimates can be improved by increasing the number of terms (i.e., $P$) in the summation. In addition, the channel estimates as derived above can be further fine-tuned by using some prior information about the channel environment. One such method is implemented by limiting the length of the channel impulse response to equal the length of the zero-suffix.

In addition to estimating the channel impulse response, the channel and noise variance estimation unit 32 estimates the noise variance in each of the sub-carriers and the sub-bands using the CE symbols. The noise variance estimate will help improve the performance of the system 22 in the presence of interference. One type of interference that a noise variance estimate will help mitigate is narrowband interference that arises from narrowband devices operating in a common band. For example, the bandwidth of an ultra-wideband (UWB) system in a WiMedia application is about 1.5 GHz and since UWB devices do not have exclusive use of this band, there is a high probability that there will be interference from other narrowband devices operating in this band. Under a narrowband interference scenario, some of the sub-carriers will be affected severely and this will degrade the overall performance of the system. Another example of in-band interference: in a WiMedia TFI-OFDM system, multiple access is attained by using a frequency hopping sequence such as one shown in FIG. 2. As a result of this scheme, one piconet might cause interference to another piconet if the piconets are in close range. Both the piconet interference and the narrowband interference will manifest as white noise to the desired signal at the receiver.

Usually, in a coded system, it is assumed that all the OFDM symbols have the same signal-to-noise-ratio (SNR) or white noise, and therefore this term is removed from the metric calculation unit, which in this disclosure may be part of the demapper (36 or 44) or the Viterbi decoder (40 or 48). However, this is not the case in reality due to the above mentioned in-band interference scenarios. Under these conditions, scaling the metrics for the Viterbi decoder by a term proportional to the noise power will help improve the receiver performance. This finding necessitates the desire to estimate the noise variance in each of the sub-carriers for all the CE symbols.

The channel and noise variance estimation unit 32 determines the noise variance in each sub-carrier by using the following equation

$$\sigma^2_{CE,n}(k) = \left| R_n(k) - A(k)\hat{H}_{CE,m}(k) \right|^2 \tag{6}$$

where $n \in \{1,2,3,4,5,6\}$ represents the symbol number in the FD preamble.

In order to improve the reliability of the noise variance estimate, the noise variance in each symbol is derived by averaging $\sigma_{CE,n}^2(k)$ over all the sub-carriers as shown in the following equation:

$$\sigma^2_{CE,n} = \frac{1}{N}\sum_{k=0}^{N-1}\sigma^2_{CE,n}(k) \tag{7}$$

With the channel impulse response estimate and noise variance estimates, the equalization unit 34 equalizes and then scales the output by the noise variance estimates for header and payload symbols as shown below:

$$X_n(k) = G_m(k)R_n(k) \tag{8}$$

wherein $X_n(k)$ is the output of the equalization unit 34, and $G_m(k)$ is derived from $\hat{H}_{CE,m}(k)$ which is based on the equalization scheme adapted for the system.

$$Y_n(k) = \frac{X_n(k)}{\sigma^2_{CE,\mathrm{mod}(n-1,6)+1}(k)} \tag{9}$$

or

$$Y_n(k) = \frac{X_n(k)}{\sigma^2_{CE,\mathrm{mod}(n-1,6)+1}} \tag{10}$$

where the function *mod(a,b)* represents the remainder of *a/b*. X results from channel compensation and Y is the result of scaling this output by the noise variance estimates. Y is the input to the demapper (bit-metric calculation unit).

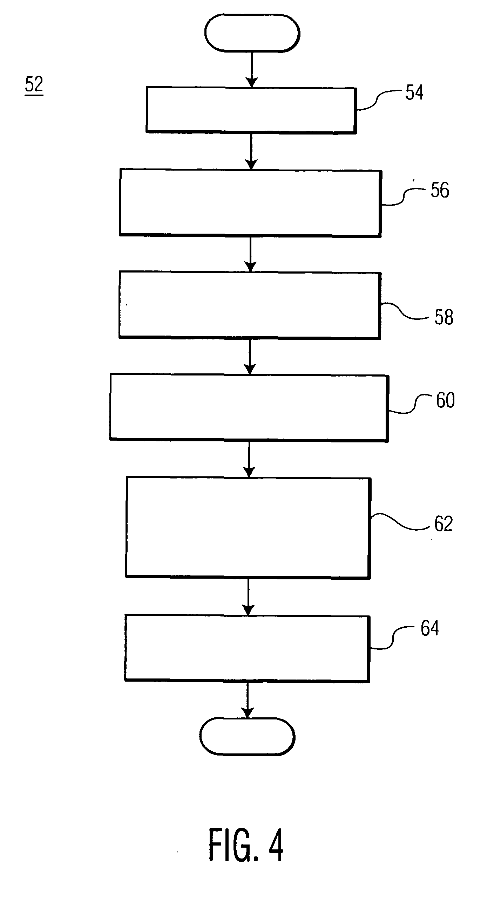

FIG. 4 shows a flow chart 52 describing the operation of the TFI-OFDM communications receiver 22 depicted in FIG. 3. Operation of the TFI-OFDM communications receiver 22 begins at 54 where the RF front-end receives a data packet embodied in a RF signal of a certain frequency and another signal at a different frequency generated from the oscillator 26. The synchronization unit 28 receives the mixed-down signal from the RF front-end and performs various synchronization operations at 56. As mentioned above, these synchronization operations include adjusting the timing and the frequency of the mixed-down signal, adjusting the AGC settings, and removing zero-padded sequencing and guard intervals.

The FFT processor 30 transforms the adjusted signal from the synchronization unit 28 into the frequency domain at 58. The channel and noise variance estimation unit 32 then uses the band numbers provided in the various TFCs of the frequency hopping pattern along with the transformed OFDM symbols in the FD preamble 20 to estimate the channel impulse response and the noise variance associated with the channel at 60. Once the channel and noise variance estimation unit 32 has estimated the channel impulse response and noise variance, the equalization unit 34 then equalizes or compensates the OFDM symbols in the header section 14 and the payload section 16 for the effects of the channel at 62. In addition, the equalization unit 34 can equalize or compensate the OFDM symbols in the header section 14 and the payload section 16 for the effects of CPE. After equalization, the decoder 35 decodes the header OFDM symbols and the payload OFDM symbols at 64.

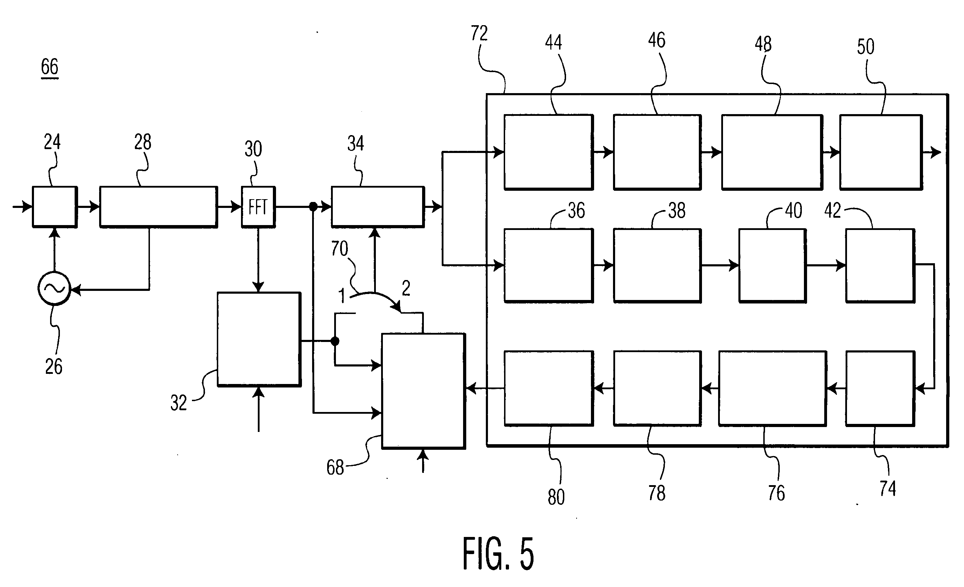

FIG. 5 shows block diagram of a TFI-OFDM receiver 66 according to a second embodiment. In this embodiment, there is an updater 68 that updates the channel estimates and noise variance estimates on the header symbols that are generated by the channel and noise variance estimation unit 32. Below is a more detailed discussion on updating the channel estimates and noise variance estimates on the header symbols. The TFI-OFDM receiver 66 of FIG. 5 further includes a switch 70 that enables the channel and noise variance estimation unit 32 to output the estimated channel impulse response and noise variance estimates to the equalization unit 34 when the switch is in position 1. The equalization unit 34 will equalize or compensate the OFDM symbols in the header section 14 and the payload section 16 for the effects of the channel and noise variance in the manner described above.

A decoder 72 then decodes the OFDM symbols for the header section and the payload section. The decoder 72 is similar to the decoder 35 shown in FIG. 3 in that there is a separate branch for decoding the OFDM symbols of the header section and the payload section. Like FIG. 3, these branches include the same elements (i.e., the despreader and demapper 36, bit de-interleaver 38, Viterbi decoder 40 and RS decoder 42 for the header symbol branch and the despreader and demapper 44, bit de-interleaver 46, de-puncturer and Viterbi decoder 48 and De-scrambler 50 for the payload symbol branch) that perform the same functions in the manner described above. A difference between the decoder 72 of FIG. 5 and the decoder 35 of FIG. 3 is that the decoder in FIG. 5 includes a feed back branch for further processing the OFDM symbols of the header section.

The feed-back branch in decoder 72 includes encoding modules in order to generate reference header symbols from the decoded header bits. It includes an RS encoder 74 that RS re-encodes the header bits generated from the RS decoder 42. A convolution encoder 76 receives the RS encoded transmitted header bits from the RS encoder 74 and convolutionally encodes the bits. A bit de-interleaver 78 receives the convolutionally encoded transmitted header bits from the convolutional encoder 76 and bit interleaves the bits. A mapper and spreader 80 receives the bit-interleaved bits from the bit interleaver 78 and maps the bits to generate reference symbols that are sent to the updater 68. Below is a more detailed discussion on the processing operations performed in the feed-back branch.

The decoder 72 shown in FIG. 5 is illustrative of one embodiment that can perform the additional processing operations on the OFDM symbols of the header section. One of ordinary skill in the art will recognize that other configurations are possible and that the implementation shown in FIG. 5 is not limiting with respect to these configurations. For example, latency in the decode-encode chain (i.e., RS decoder 42 and RS encoder blocks 74) can be reduced by removing RS decoder 42 and RS encoder blocks 74. In this case, a Header Check Sequence (HCS) can be used to verify if the decoded header bits are correct. The estimates will then be updated only when the header bits are decoded without errors. In another embodiment, the despreader and demapper 36, bit de-interleaver 38, Viterbi decoder 40, RS decoder 42, RS encoder 74, convolution encoder 76 and bit interleaver 78, may be replaced with a slicer that uses slicing, which is a simplified method that generates reference symbols. In this embodiment, the slicer would generate the reference symbols to the updater 68.

The updater unit 68 receives the reference OFDM header symbols from the mapper and spreader 80. The updater unit 68 then updates the channel impulse response estimate and the noise variance estimates by using the band numbers provided in the various TFCs of the frequency hopping pattern, the estimated channel impulse response and the noise variance estimates generated from the channel and noise variance estimation unit 32 (derived from CE symbols), the symbols generated from the FFT processor 30 which are referred to as received symbols and the reference symbols sent to the updater 68 from the feed-back branch of the decoder 72. Below is a more detailed discussion on re-estimating of the channel impulse response and the noise variance.

After updating the channel impulse response and the noise variance estimates, the switch 70 is moved to position 2. When the switch is in position 2, the updater 68 then sends the updated channel impulse response and the noise variance estimates to the equalization unit 34, which equalizes or compensates the OFDM symbols in the payload section 16 for the effects of the channel. The decoder 72 then processes the OFDM symbols in the payload in the upper branch in the manner described above.

The updater 68 improves the channel impulse estimates and noise variance estimates derived in Equations 2 and 6 by utilizing the header symbols instead of solely the FD preamble OFDM symbols. In order to update the estimates, the updater needs to know the information sequence. An estimate of the transmitted data can be generated either by slicing the output of the FFT processor 30 or by using the output of the Viterbi decoder 40. Since the channel impulse response is assumed static for the duration of the packet, updating the estimates over payload symbols does not provide significant performance gains (assuming that the in-band interference is present for the complete duration of the packet). In addition, the complexity and latency associated with the update over the payload symbols is considerably more than the update over header symbols. In addition, the header is usually transmitted at the lowest data rate and therefore it is more resilient to the channel errors than the payload symbols. In addition, the receiver can process the payload symbols only after the header is decoded. This implies that the reference symbols for the header OFDM symbols can be generated and the estimates updated before the payload symbols are processed. Thus, the updater 68 will update the channel impulse response and the noise variance estimates based on the FD preamble OFDM symbols and the header OFDM symbols.

In a WiMedia TFI-OFDM system, 12 OFDM symbols (with at least four symbols in each band) are used to transmit the header information. The channel estimates ($\hat{H}_{HDR,m}(k)$) can be derived from the header symbols as shown in the following equation:

$$\hat{H}_{HDR.m}(k) = \frac{1}{P}\sum_{p=1}^{P}\frac{R_{n(m,p)}(k)}{\hat{S}_{n(m,p)}(k)} \qquad (11)$$

wherein $\hat{S}_n(k)$ represents the estimate of the transmitted symbol $S_n(k)$ and is derived from either the slicer output or the Viterbi decoder output. The term $R_n(k)$ represents the received header symbols (after FFT processor 30). Substituting Equation 1 in Equation 11, results in:

$$\hat{H}_{HDR.m}(k) = \frac{1}{P}\sum_{p=1}^{P}(H_m(k) + \frac{N_{n(m,p)}(k)}{\hat{S}_{n(m,p)}(k)}) = H_m(k) + \frac{1}{P}\sum_{p=1}^{P}\frac{N_{n(m,p)}(k)}{\hat{S}_{n(m,p)}(k)} \qquad (12)$$

wherein

$$P = \begin{matrix} 4 & TFC = \{1,2,3,4\} \\ 12 & TFC = \{5,6,7\} \end{matrix} \qquad (13)$$

and $n(m,p)$ is given as

$$n(m,p) = \begin{matrix} m+3(p-1) & TFC = \{1,2\} \\ 2(m-1)+p+4\left\lfloor\dfrac{p-1}{2}\right\rfloor & TFC = \{3,4\} \\ p & TFC = \{5,6,7\} \end{matrix} \qquad (14)$$

wherein $\lfloor x \rfloor$ represents the integer part of x.

The noise variance in each sub-carrier can then be calculated using the following equation:

$$\sigma^2_{HDR.n}(k) = \frac{1}{2}\left[\left|R_n(k) - \hat{S}_n(k)\hat{H}_{HDR.m}(k)\right|^2 + \left|R_{n+6}(k) - \hat{S}_{n+6}(k)\hat{H}_{HDR.m}(k)\right|^2\right] \qquad (15)$$

wherein $n \in \{1,2,3,4,5,6\}$.

The noise variance in each band is then derived by averaging $\sigma_{HDR,m}^2(k)$ over the entire band as shown in the following equation:

$$\sigma_{HDR.n}^2 = \frac{1}{N}\sum_{k=0}^{N-1}\sigma^2_{HDR.n}(k) \qquad (16)$$

In a WiMedia application for TFI-OFDM communications system 66, the OFDM sub-carriers are modulated using Quadrature Phase-shift Keying (QPSK) mapping for the lower data rate modes. This enables the TFI-OFDM receiver 66 to make reliable decisions on the symbols by using a simple slicer which is a simplified method to generate reference symbols. The output of the slicer is represented by the following equation:

$$\hat{b} = sign(X_n(k)) = sign(G_m(k)R_n(k)) \qquad (17)$$

The estimated bits are then mapped into symbols to form $\hat{S}_n(k)$, which will be used in Equation 11 and 15 to update the estimates.

The performance of the TFI-OFDM receiver 66 is further improved by using iterative decoding. In the first pass, channel impulse response and noise variance are estimated on the FD preamble symbols (i.e., the CE symbols). These estimates are then used by the equalization unit 34 to equalize and scale the received data sent from the FFT processor 30. After the Viterbi decoder or RS decoder in the header processing branch of the decoder 72, the bits are encoded back to the updater 68 to generate the reference symbols ($\hat{S}_n$). The channel estimates and the noise variance estimates are updated according to Equations 11 and 15, respectively. In the second pass, after the switch has been positioned in setting 2, the updated channel estimates ($\hat{H}_{HDR,m}$) and noise variance estimates ($\sigma_{HDR,n}^2$) are used to equalize and scale the received data from the FFT processor 30. Although the computational complexity of this approach may be very high compared to a standard receiver, this disclosure reduces the computational complexity by considering Viterbi decoder decisions of header symbols only. Thus, the header symbols are decoded prior to the decoding of the rest of the packet. This enables the TFI-OFDM receiver system 66 to compute reference symbols $\hat{S}_n$ corresponding to the header bits and then update the channel estimate and the noise variance estimate accordingly.

In another embodiment, the updater 68 can perform a weighted-averaging operation on the estimates derived from the header symbols to further improve the results. In this embodiment, the estimates derived over the header symbols are averaged with the estimates derived over the CE symbols as shown below:

$$\hat{H}_m(k) = w_m \hat{H}_{CE,m}(k) + (1 - w_m)\hat{H}_{HDR,m}(k) , \qquad (18)$$

$$\sigma_m^2(k) = w_m \sigma_{CE,m}^2(k) + (1 - w_m)\sigma_{HDR,m}^2(k) \qquad (19)$$

$$\sigma_m^2 = w_m \sigma_{CE,m}^2 + (1 - w_m)\sigma_{HDR,m}^2 \qquad (20)$$

where $0 \leq w_m \leq 1$ represent the weight for band $m$ and can be modified by the receiver (user) dynamically.

$\hat{H}_{CE,m}(k)$ and $\hat{H}_{HDR,m}(k)$ *represent* the channel impulse response estimates for sub-carrier $k$ in sub-band $m$ derived from the CE symbols and header symbols and is given by Equations 2 and 11, respectively.

$\sigma_{CE,m}^2$ and $\sigma_{HDR,m}^2$ represent the noise variance estimate in sub-band $m$ derived from the CE symbols and the header symbols, respectively.

The payload symbols are equalized using:

$$X_n(k) = G_m(k)R_n(k) \qquad (21)$$

where $X_n(k)$ is the output of the equalization unit 34, and $G_m(k)$ is derived from $\hat{H}_m(k)$ based on the equalization scheme adapted for the TFI-OFDM receiver 66.

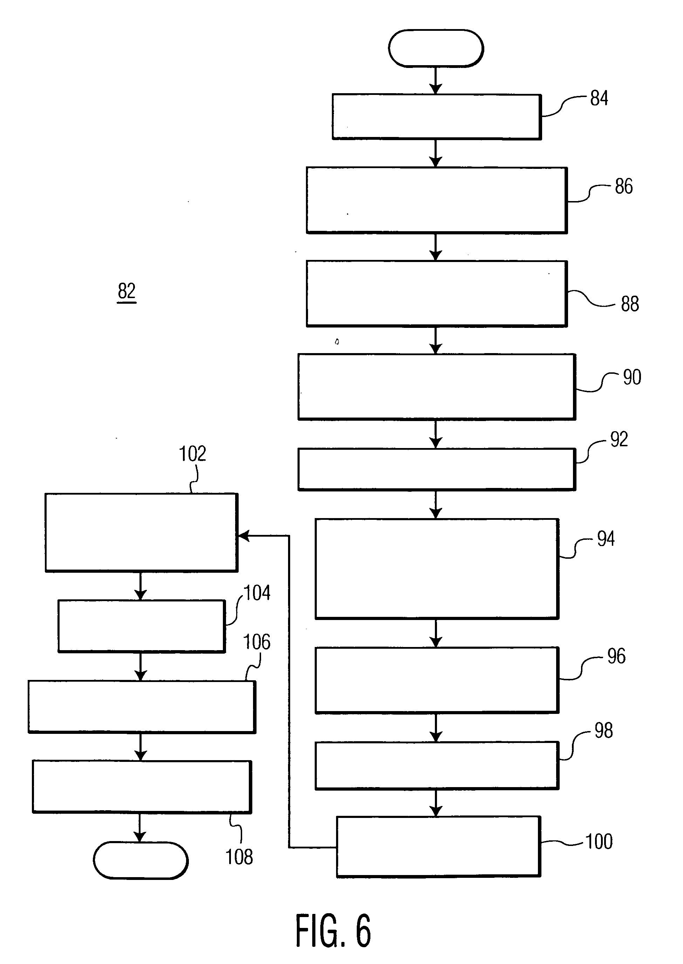

Fig 6 shows a flow chart 82 describing the operation of the TFI-OFDM receiver 66 depicted in FIG. 5. Operation of the TFI-OFDM receiver 66 begins at 84 where the RF front-end receives a data packet embodied in a RF signal of a certain frequency and down-converts the signal using another signal at a different frequency generated from the oscillator 26. The synchronization unit 28 receives the mixed-down signal and performs various synchronization operations at 86. As mentioned above, these synchronization operations include adjusting the timing and the frequency of this signal, adjusting the AGC settings, detecting the frame beginning and removing zero-padded sequencing and guard intervals.

The FFT processor 30 transforms the adjusted signal from the synchronization unit 28 into the frequency domain at 88. The channel and noise variance estimate unit 32 then uses the band numbers provided in the various TFCs of the frequency hopping pattern along with the transformed OFDM symbols (i.e., CE symbols) in the FD preamble 20 to estimate the channel and the noise variance associated with the channel at 90. Next, the switch 70 is moved to position 1 at 92, so that the equalization unit 34 equalizes or compensates the OFDM symbols in the header section for the effects of the channel and noise variance at 94.

The decoder 72 then decodes the OFDM symbols for the header section at 96. Transmitted header bits are generated at 98 and further processed to generate the reference symbols that are sent to the updater at 100. The updater unit 68 then receives the reference OFDM header symbols and updates the channel impulse response estimate and the noise variance estimates by using the reference symbols with the band numbers provided in the various TFCs of the frequency hopping pattern and the estimated channel impulse response and the noise variance estimates generated from the channel and noise variance estimation unit 32 (derived from CE symbols), and the received symbols generated from the FFT processor 32 at 102.

After updating the channel impulse response and the noise variance estimates, the switch 70 is moved to position 2 at 104. When the switch is in position 2, the updater 68 then sends the updated channel impulse response and the noise variance estimates to the equalization unit 34, which equalizes or compensates the OFDM symbols in the payload section 16 at 106. The decoder 72 then processes the OFDM symbols in the payload in the upper branch of the decoder at 108.

The foregoing flow charts of FIGS. 4 and 6 show some of the processing acts associated with operating TFI-OFDM receivers 22 and 66. In this regard, each block in the flow charts represents a process act associated with performing these functions. It should also be noted that in some alternative implementations, the acts noted in the blocks may occur out of the order noted in the figure or, for example, may in fact be executed substantially concurrently or in the reverse order, depending upon the act involved. Also, one of ordinary skill in the art will recognize that additional blocks that describe these processing acts may be added.

The TFI-OFDM receiver 22 and 66 can take the form of an entirely hardware embodiment, an entirely software embodiment or an embodiment containing both hardware and software elements. In one embodiment, the operations performed by TFI-OFDM systems 22 and 66 are implemented in software, which includes but is not limited to firmware, resident software, microcode, etc.

Furthermore, the operations performed by TFI-OFDM receiver 22 and 66 can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be any apparatus that can contain, store, communicate, propagate, or transport the program containing the instructions for performing the image processing functions for use by or in connection with an instruction execution system, apparatus, or device. The computer readable medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include a compact disk - read only memory (CD-ROM), a compact disk - read/write (CD-R/W) and a digital video disc (DVD).

It is apparent that there has been provided with this disclosure, an approach for improving performance in a TFI-OFDM. While the disclosure has been particularly shown and described in conjunction with a preferred embodiment thereof, it will be appreciated that a person of ordinary skill in the art can effect variations and modifications without departing from the scope of the disclosure.

**Claims**

**1.** An orthogonal frequency division multiplexed receiver system (22), comprising:

a receiver (24) configured to receive data packets in certain frequency bands, wherein each received data packet comprises OFDM symbols segmented into a preamble section (12), header section (14) and payload section (16);
a Fast Fourier Transform processor (30) configured to transform the OFDM symbols from a time domain into a frequency domain;
a channel estimator (32) configured to estimate a channel impulse response for the data packets, wherein the channel estimator (32) estimates the channel impulse response from frequency domain OFDM symbols in the preamble section (12); and
a noise variance estimator (32) configured to derive a noise variance estimate from the frequency domain OFDM symbols in the preamble section (12);

**characterized in that**
the receiver system is a time-frequency interleaved, orthogonal frequency division multiplexed, TFI-OFDM, receiver system and the certain frequency bands correspond to a time frequency code, TFC, number;
and that the channel estimator (32) and the noise variance estimator (32) are adapted to use a band number information associated with various TFC numbers of a frequency hopping pattern, and the frequency domain OFDM symbols in the preamble section (12) to estimate the channel impulse response and to derive the noise variance estimate.

2. The receiver system (66) of claim 1, further comprising:

an updater (68) configured to update the channel impulse response estimated by the channel estimator (32) and the noise variance estimate derived by the noise variance estimator (32).

3. The TFI-OFDM receiver system (66) according to claim 2, further comprising an equalization unit (34) configured to compensate the OFDM symbols in the payload section (16) according to the updated channel estimates and the updated noise variance estimate.

4. The TFI-OFDM receiver system (66) according to claim 3, further comprising a decoder (72) configured to decode the compensated OFDM symbols in the header section (14) and payload section (16).

5. The TFI-OFDM receiver system (66) according to claim 4, wherein the decoder (72) comprises a branch configured to feed back re-encoded OFDM symbols decoded for the header section (14) to the updater (68).

6. The TFI-OFDM receiver system (66) according to claim 5, wherein the updater (68) re-estimates the channel impulse response and the noise variance estimate according to the fed back OFDM symbols decoded for the header section (14), the OFDM symbols transformed by the Fast Fourier Transform processor (30) and the initial estimates of the channel impulse response and noise variance.

7. The TFI-OFDM receiver system (66) according to claim 6, wherein the updater (68) performs a weighted average of the initial estimates of the channel impulse response and noise variance and the re-estimated channel impulse response and noise variance.

8. The TFI-OFDM receiver system (66) according to claim 6, further comprising a switching mechanism (70) configured to output the channel impulse response estimated by the channel estimator (32) and the noise variance estimate derived by the noise variance estimator (32) to the equalization unit (34) in a first setting for decoding OFDM symbols in the header section (14) and to output the re-estimated channel impulse response and noise variance estimate from the updater (68) to the equalization unit (34) for decoding OFDM symbols in the payload section (16).

9. A method for compensating for interference that arises from ultra-wideband devices operating in a communications link, the method comprising:

receiving data packets in certain frequency bands corresponding to transmission channels, wherein each data packet comprises OFDM symbols segmented into a preamble section (12), header section (14) and payload section (16);
transforming the OFDM symbols from a time domain into a frequency domain;
estimating a channel impulse response from frequency domain OFDM symbols in the preamble section (12); and
deriving a noise variance estimate from the frequency domain OFDM symbols in the preamble section (12);

**characterized by** the communication link utilizing time - frequency interleaved orthogonal frequency division multiplexing, TFI-OFDM and the certain frequency bands corresponding to a time frequency code, TFC, number, and by using a band number information associated with various TFC numbers of a frequency hopping pattern and the frequency domain OFDM symbols in the preamble section (12) to estimate the channel impulse response and to derive the noise variance estimate.

10. The method according to claim 9, wherein the method is used for improving performance of the ultra-wideband devices operating in the communications link, and comprises updating the estimated channel impulse response and the derived noise variance estimate.

11. The method according to claim 10, further comprising compensating the OFDM symbols in the payload section (16) according to the updated channel estimates and the updated noise variance estimate.

12. The method according to claim 11, further comprising decoding the compensated OFDM symbols in the header section (14) and payload section (16), wherein the decoding comprises feeding back OFDM symbols decoded for the header section (14).

13. The method according to claim 12, wherein the updating comprises re-estimating the channel impulse response and the noise variance estimate according to the fed back OFDM symbols decoded for the header section (14), the transformed OFDM symbols and the initial estimates of the channel impulse response and noise variance.

14. The method according to claim 13, further comprising performing a weighted average of the initial estimates of the channel impulse response and noise variance and the re-estimated channel impulse response and noise variance.

15. A computer readable medium having computer executable instructions for performing the method of claim 9.

**Patentansprüche**

1. Orthogonalfrequenzmultiplexempfangssystem (22), das Folgendes umfasst:

einen Empfänger (24), vorgesehen zum Empfangen von Datenpaketen in bestimmten Frequenzbändern, wobei jedes empfangene Datenpaket OFDM Symbole aufweist, segmentiert in einen Präambelteil (12), einen Headerteil (14) und einen Nutzlastteil (16);
einen schnellen Transformationsprozessor (30), vorgesehen zum Transformieren der OFDM Symbole aus einer Zeitdomäne in eine Frequenzdomäne;
einen Kanalschätzer (32), vorgesehen zum Schätzen einer Kanalimpulsantwort für die Datenpakete, wobei der Kanalschätzer (32) die Kanalimpulsantwort von den Frequenzdomäne-OFDM-Symbolen in dem Präambelteil (12) schätzt; und
einen Rauschvarianzschätzer (32), vorgesehen zum Herleiten einer Rauschvarianzschätzung aus den Frequenzdomäne-OFDM-Symbolen in dem Präambelteil (12);

**dadurch gekennzeichnet, dass**
das Empfangssystem ein zeitfrequenzverschachteltes, Orthogonalfrequenzmultiplex-TFI-OFDM-Empfangssystem ist und die bestimmten Frequenzbänder einer Zeitfrequenzcodezahl, TFC, entsprechen,
und dass der Kanalschätzer (32) und der Rauschvarianzschätzer (32) dazu vorgesehen sind, eine Bandzahlinformation, die mit mehreren TFC Zahlen eines Frequenzsprungmusters assoziiert ist, zu benutzen und die Frequenzdomäne-OFDM-Symbole in dem Präambelteil (12) zum Schätzen der Kanalimpulsantwort und zum Herleiten der Rauschvarianzschätzung.

2. Empfangssystem (66) nach Anspruch 1, das weiterhin Folgendes umfasst:

einen Aktualisierer (68), vorgesehen zum Aktualisieren der durch den Kanalschätzer (32) geschätzten Kanalimpulsantwort und der durch den Rauschvarianzschätzer hergeleiteten Rauschvarianzschätzung.

3. Das TFI-OFDM Empfangssystem (66) nach Anspruch 2, das weiterhin eine Ausgleicheinheit (34) aufweist, vorgesehen zum Ausgleichen der OFDM Symbole in dem Nutzlastteil (16) entsprechend den aktualisierten Kanalschätzungen und der aktualisierten Rauschvarianzschätzung.

4. Das TFI-OFDM Empfangssystem (66) nach Anspruch 3, das weiterhin einen Decoder (72) aufweist, vorgesehen zum Decodieren der ausgeglichenen OFDM Symbole in dem Headerteil (14) und dem Nutzlastteil (16).

5. Das TFI-OFDM Empfangssystem (66) nach Anspruch 4, wobei der Decoder (72) einen Zweig aufweist, vorgesehen zum Rückkoppeln neucodierter OFDM Symbole, die für den Headerteil (14) decodiert wurden, zu dem Aktualisierer (68).

6. Das TFL-OFDM Empfangssystem (66) nach Anspruch 5, wobei der Aktualisierer (68) die Kanalimpulsantwort und die Rauschvarianzschätzung entsprechend den für den Headerteil (14) decodierten rückgekoppelten OFDM Symbolen, den durch den FFT-Prozessor (30) transformierten Symbolen und den Anfangsschätzungen der Kanalimpulsantwort und der Rauschvarianz aufs neue schätzt.

7. Das TFI-OFDM Empfangssystem (66) nach Anspruch 6, wobei der Aktualisierer (68) einen gewichteten Mittelwert der Anfangsschätzungen der Kanalimpulsantwort und der Rauschvarianz sowie der aufs neue geschätzten Kanalimpulsantwort und Rauschvarianz durchführt.

8. Das TFI-OFDM Empfangssystem (66) nach Anspruch 6, das weiterhin einen Umschaltmechanismus (70) aufweist, vorgesehen zum Ausliefern der durch den Kanalschätzer (32) geschätzten Kanalimpulsantwort und der durch den Rauschvarianzschätzer (32) hergeleiteten Rauschvarianzschätzung zu der Ausgleicheinheit (34) in einer ersten Situation zum Decodieren von OFDM Symbolen in dem Headerteil (14) und zum Ausliefern der aufs neue geschätzten Kanalimpulsantwort und der Rauschvarianzschätzung aus dem Aktualisierer (68) zu der Ausgleicheinheit (34) zum Decodieren von OFDM Symbolen in dem Nutzlastteil (16).

9. Verfahren zum Ausgleichen von Interferenz, die aus Ultrabreitbandanordnungen herrührt, die in einer Kommunikationsverbindung arbeiten, wobei das Verfahren Folgendes umfasst:

das Empfangen von Datenpaketen in bestimmten Frequenzbändern entsprechend Übertragungskanälen, wobei jedes Datenpaket OFDM Symbole aufweist, segmentiert in einen Präambelteil (12), einen Headerteil (14) und einen Nutzlastteil (16);
das Transformieren der OFDM Symbole aus einer Zeitdomäne in eine Frequenzdomäne;
das Schätzen einer Kanalimpulsantwort von den Frequenzdomäne-OFDM-Symbolen in dem Präambelteil (12); und
das Herleiten einer Rauschvarianzschätzung aus den Frequenzdomäne-OFDM-Symbolen in dem Präambelteil (12);

**dadurch gekennzeichnet, dass** die Kommunikationsverbindung zeitfrequenzverschachteltes, Orthogonalfrequenzmultiplexing TFI-OFDM benutzt und die bestimmten Frequenzbänder einer Zeitfrequenzcodezahl, TFC, entsprechen,
und dass eine Bandzahlinformation verwendet wird, die mit mehreren TFC Zahlen eines Frequenzsprungmusters und den Frequenzdomäne-OFDM-Symbolen in dem Präambelteil (12) assoziiert ist, zum Schätzen der Kanalimpulsantwort und zum Herleiten der Rauschvarianzschätzung.

10. Verfahren nach Anspruch 9, wobei das Verfahren zum Verbessern der Leistungsfähigkeit der Ultrabreitbandanordnungen, die in der Kommunikationsverbindung arbeiten, angewandt wird und Aktualisierung der geschätzten Kanalimpulsantwort und der hergeleiteten Rauschvarianzschätzung umfasst.

11. Verfahren nach Anspruch 10, das weiterhin Kompensation der OFDM Symbole in dem Nutzlastteil (16) entsprechend den aktualisierten Kanalschätzungen und den aktualisierten Rauschvarianzschätzungen umfasst.

12. Verfahren nach Anspruch 11, das weiterhin Decodierung der kompensierten OFDM Symbole in dem Headerteil (14) und dem Nutzlastteil (16) umfasst, wobei die Decodierung das Rückkoppeln für den Headerteil (14) decodierter OFDM Symbole umfasst.

13. Verfahren nach Anspruch 12, wobei die Aktualisierung die Neuschätzung der Kanalimpulsantwort und der Rauschvarianzschätzung entsprechend den für den Headerteil (14) decodierten rückgekoppelten OFDM Symbolen, den transformierten OFDM Symbolen und den Anfangsschätzungen der Kanalimpulsantwort und Rauschvarianz umfasst.

14. Verfahren nach Anspruch 13, das weiterhin die Durchführung eines gewichteten Mittelwertes der Anfangsschätzungen der Kanalimpulsantwort und der Rauschvarianz und der neu geschätzten Kanalimpulsantwort und Rauschvarianz umfasst.

15. Mit einem Computer auslesbares Medium mit vom Computer durchführbaren Instruktionen zum Durchführen des Verfahrens nach Anspruch 9.

**Revendications**

1. Système de réception de multiplexage par répartition orthogonale de la fréquence (22) comprenant :

un récepteur (24) qui est configuré de manière à recevoir des paquets de données dans certaines bandes de fréquences, dans lequel chaque paquet de données reçu comprend des symboles OFDM qui sont segmentés en une section de préambule (12), une section d'en-tête (14) et une section de charge utile (16) ;

un processeur de transformée de Fourier rapide (30) qui est configuré de manière à transformer les symboles OFDM à partir d'un domaine temporel en un domaine fréquentiel ;

un estimateur de canal (32) qui est configuré de manière à estimer une réponse impulsionnelle de canal pour les paquets de données, dans lequel l'estimateur de canal (32) estime la réponse impulsionnelle de canal à partir de symboles OFDM de domaine fréquentiel dans la section de préambule (12) ; et

un estimateur de variance de bruit (32) qui est configuré de manière à dériver un état estimatif de variance de bruit à partir des symboles OFDM de domaine fréquentiel dans la section de préambule (12) ;

**caractérisé en ce que** :

le système de réception est un système de réception de multiplexage par répartition orthogonale de la fréquence à entrelacement de la fréquence temporelle et les certaines bandes de fréquences correspondent à un numéro de code de fréquence temporelle TFC ; et

l'estimateur de canal (32) et l'estimateur de variance de bruit (32) sont adaptés de manière à utiliser une information de numéro de bande qui est associée à divers numéros TFC d'une configuration de sauts de fréquence et les symboles OFDM de domaine fréquentiel dans la section de préambule (12) de manière à estimer la réponse impulsionnelle de canal et à dériver l'état estimatif de variance de bruit.

2. Système de réception (66) selon la revendication 1, comprenant en outre :

un dispositif de mise à jour (68) étant configuré de manière à mettre à jour la réponse impulsionnelle de canal qui est estimée par l'estimateur de canal (32) et l'état estimatif de variance de bruit qui est dérivé par l'estimateur de variance de bruit (32).

3. Système de réception TFI-OFDM (66) selon la revendication 2, comprenant en outre une unité d'égalisation (34) qui est configurée de manière à compenser les symboles OFDM dans la section de charge utile (16) selon les états estimatifs de canal mis à jour et selon l'état estimatif de variance de bruit mis à jour.

4. Système de réception TFI-OFDM (66) selon la revendication 3, comprenant en outre un décodeur (72) qui est configuré de manière à décoder les symboles OFDM compensés dans la section d'en-tête (14) et la section de charge utile (16).

5. Système de réception TFI-OFDM (66) selon la revendication 4, dans lequel le décodeur comprend une branche qui est configurée de manière à renvoyer des symboles OFDM codés à nouveau qui sont décodés pour la section d'en-tête (14) au dispositif de mise à jour (68).

6. Système de réception TFI-OFDM (66) selon la revendication 5, dans lequel le dispositif de mise à jour (68) estime à nouveau la réponse impulsionnelle de canal et l'état estimatif de variance de bruit selon les symboles OFDM renvoyés qui sont décodés pour la section d'en-tête (14), les symboles OFDM étant transformés par le processeur de transformée de Fourier rapide (30) et les états estimatifs initiaux de la réponse impulsionnelle de canal et de variance de bruit.

7. Système de réception TFI-OFDM (66) selon la revendication 6, dans lequel le dispositif de mise à jour (68) exécute une moyenne pondérée des états estimatifs initiaux de la réponse impulsionnelle de canal et de variance de bruit et de la réponse impulsionnelle de canal et de variance de bruit estimée à nouveau.

8. Système de réception TFI-OFDM (66) selon la revendication 6, comprenant en outre un mécanisme de commutation (70) étant configuré de manière à fournir la réponse impulsionnelle de canal qui est estimée par l'estimateur de canal (32) et l'état estimatif de variance de bruit qui est dérivé par l'estimateur de variance de bruit (32) à l'unité d'égalisation (34) dans un premier réglage pour décoder des symboles OFDM dans la section d'en-tête (14) et de manière à fournir la réponse impulsionnelle de canal estimée à nouveau et l'état estimatif de variance de bruit à partir du dispositif de mise à jour (68) à l'unité d'égalisation (34) pour décoder des symboles OFDM dans la section de charge utile (16).

9. Procédé pour compenser des interférences provenant de dispositifs à bande extrêmement large qui fonctionnent dans une liaison de communication, le procédé comprenant les étapes suivantes consistant à :

recevoir des paquets de données dans certaines bandes de fréquences qui correspondent à des canaux de transmission, dans lequel chaque paquet de données comprend des symboles OFDM qui sont segmentés en une section de préambule (12), une section d'en-tête (14) et une section de charge utile (16) ;

transformer les symboles OFDM à partir d'un domaine temporel en un domaine fréquentiel ;

estimer une réponse impulsionnelle de canal à partir de symboles OFDM de domaine fréquentiel dans la section de préambule (12) ; et

dériver un état estimatif de variance de bruit à partir de symboles OFDM de domaine fréquentiel dans la section de préambule (12) ;

**caractérisé par** la liaison de communication utilisant un multiplexage par répartition orthogonale de la fréquence à entrelacement de la fréquence temporelle TFI-OFDM et les certaines bandes de fréquences qui correspondent à un numéro de code de fréquence temporelle TFC

et par l'utilisation d'une information de numéro de bande qui est associée à divers numéros TFC d'une configuration de sauts de fréquence et des symboles OFDM de domaine fréquentiel dans la section de préambule (12) afin d'estimer la réponse impulsionnelle de canal et afin de dériver l'état estimatif de variance de bruit.

10. Procédé selon la revendication 9, dans lequel le procédé est mis en oeuvre pour améliorer la performance des dispositifs à bande extrêmement large qui fonctionnent dans la liaison de communication et comprend l'étape suivante consistant à mettre à jour la réponse impulsionnelle de canal estimée et l'état estimatif de variance de bruit dérivé.

11. Procédé selon la revendication 10, comprenant en outre l'étape suivante consistant à compenser les symboles OFDM dans la section de charge utile (16) selon les états estimatifs de canal mis à jour et selon l'état estimatif de variance de bruit mis à jour.

12. Procédé selon la revendication 11, comprenant en outre l'étape suivante consistant à décoder les symboles OFDM compensés dans la section d'en-tête (14) et la section de charge utile (16), dans lequel le décodage comprend l'étape suivante consistant à renvoyer les symboles OFDM qui sont décodés pour la section d'en-tête (14).

13. Procédé selon la revendication 12, dans lequel la mise à jour comprend l'étape suivante consistant à estimer à nouveau la réponse impulsionnelle de canal et l'état estimatif de variance de bruit selon les symboles OFDM renvoyés qui sont décodés pour la section d'en-tête (14), les symboles OFDM transformés et les états estimatifs initiaux de la réponse impulsionnelle de canal et de variance de bruit.

14. Procédé selon la revendication 13, comprenant en outre l'étape suivante consistant à exécuter une moyenne pondérée des états estimatifs initiaux de la réponse impulsionnelle de canal et de variance de bruit et de la réponse impulsionnelle de canal et de variance de bruit estimée à nouveau.

15. Support lisible par ordinateur ayant des instructions exécutables par ordinateur pour mettre en oeuvre le procédé selon la revendication 9.

FIG. 1

HDR

hdr1 | hdr2 | ... | hdr11 | hdr12

CE1 | CE2 | CE3 | CE4 | CE5 | CE6

10

12

14

16

18

20

| TFC # | | | | | | |
|:---:|:---:|:---:|:---:|:---:|:---:|:---:|
| 1 | 1 | 2 | 3 | 1 | 2 | 3 |
| 2 | 1 | 3 | 2 | 1 | 3 | 2 |
| 3 | 1 | 1 | 2 | 2 | 3 | 3 |
| 4 | 1 | 1 | 3 | 3 | 2 | 2 |
| 5 | 1 | 1 | 1 | 1 | 1 | 1 |
| 6 | 2 | 2 | 2 | 2 | 2 | 2 |
| 7 | 3 | 3 | 3 | 3 | 3 | 3 |

# FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060114981 A1
- US 20060062322 A1

- WO 2006010159 A1